# EUROPÄISCHE PATENTSCHRIFT

(11) **EP 4 146 521 B1**
(45) Veröffentlichungstag und Bekanntmachung des Hinweises auf die Patenterteilung: **19.03.2025**
(21) Anmeldenummer: 21725052.1
(22) Anmeldetag: 04.05.2021
(51) Int. Cl.: B62D 1/185

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 07.05.2020 DE 102020205730
(43) Veröffentlichungstag der Anmeldung: 15.03.2023
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2021/061607
(87) Internationale Veröffentlichungsnummer: WO 2021/224199

(56) Entgegenhaltungen:
- DE-A1- 102004 014 506

## Beschreibung

### Stand der Technik

Die Erfindung betrifft eine Lenksäule gemäß dem Oberbegriff des Patentanspruchs 1.

Eine Lenksäule für ein Kraftfahrzeug weist eine Manteleinheit auf, in der in einer Lenkspindellagereinheit eine Lenkspindel um ihre Längsachse drehbar gelagert ist, an deren in Fahrtrichtung hinteren, dem Fahrer zugewandten Ende ein Lenkrad zur Einbringung eines Lenkbefehls durch den Fahrer angebracht ist. Die Manteleinheit wird von einer an der Fahrzeugkarosserie befestigten Trageinheit gehalten. Durch eine Verstellung der Manteleinheit relativ zur Trageinheit kann die Lenkradposition relativ zur Fahrzeugkarosserie eingestellt werden.

Eine Längsverstellung, bei der das Lenkrad in Längsrichtung, d. h. in Richtung der Längsachse relativ zur Fahrerposition nach hinten oder nach vorn verstellt werden kann, wird bei einer gattungsgemäßen Lenksäule durch eine teleskopartig verstellbare Ausgestaltung der Manteleinheit und der Lenkspindel ermöglicht. Außerdem kann die Lenksäule im Fall eines Crashs in Längsrichtung zusammengeschoben werden, wodurch wirksam verhindert wird, dass die Lenksäule in das Innere der Fahrgastzelle eindringt und zu Verletzungen der Insassen führt.

Die Manteleinheit einer gattungsgemäßen Lenksäule weist mindestens drei relativ zueinander teleskopierbare Teleskopelemente auf, die allgemein auch als Mantel- oder Profilelemente bezeichnet werden. Dies kann beispielsweise eine Drei- oder Mehrfach-Teleskopanordnung sein, mit mindestens drei oder mehr ineinander geschachtelten, als Mantelrohre ausgebildete Teleskopelemente. Diese umfasst mindestens ein inneres Mantelrohr, auch als Innenmantelrohr oder Innenmantel bezeichnet, welches koaxial in mindestens ein mittleres oder Zwischenmantelrohr eintaucht, welches seinerseits in ein äußeres Mantelrohr, auch als Außenmantelrohr oder Außenmantel bezeichnet, teleskopierbar eintaucht. Durch Zusammenschieben oder Ausziehen der Mantelrohre in Längsrichtung kann die Manteleinheit und damit die Lenksäule verkürzt oder verlängert werden.

Die Mantelrohre können direkt aneinander geführt sein, wobei als Teleskopelemente nur Mantelelemente vorhanden sind. Es sind auch Bauformen von Manteleinheiten bekannt, die denen zwischen den Mantelrohren ein oder mehrere Zwischenelemente angeordnet sind, die bezüglich der Mantelrohre teleskopierbar sind. Dabei kann als Teleskopelement koaxial zwischen zwei benachbarten Mantelrohren eine Gleit- oder Wälzlagereinheit angeordnet sein. Eine derartige Wälzlagereinheit, die beispielsweise in der DE 10 2017 221 004 A1 beschrieben ist, umfasst einen koaxial zu den Mantelrohren angeordneten Wälzkörperkäfig, in dem Wälzkörper wie Kugeln oder Rollen gelagert sind, die zwischen den Mantelrohren abwälzbar sind. Dadurch wird eine lineare Wälzlagerung gebildet, die eine leichtgängige Verstellung und eine spielarme, biegesteife Abstützung ermöglicht. Alternativ kann eine lineare Gleiteinheit vorgesehen sein, die beispielsweise als Gleithülse koaxial zwischen den Mantelrohren angebracht ist. Eine derartige Wälzlagereinheit oder Gleiteinheit, die zwischen Außen-, Innen- und/oder Zwischenmantelrohren angeordnet sein kann, ist ebenfalls teleskopierbar relativ zu mindestens einem Mantelrohr und kann somit ein gattungsgemäßes Teleskopelement bilden, nämlich ein zwischengelagertes Zwischenelement.

Zur Längsverstellung einer Lenksäule wird üblicherweise eine Verstellkraft in Längsrichtung zwischen dem äußeren und inneren Teleskopelement, also zwischen Außenmantelrohr und Innenmantelrohr ausgeübt, beim autonomen Fahren bevorzugt mittels eines elektromotorischen Verstellantriebs. Das oder die zwischen dem äußeren und inneren Teleskopelement zwischengelagerten Teleskopelemente wie Zwischenmantelrohre, Wälzlagereinheiten, Gleiteinheiten oder dergleichen werden bei einer Verstellung der Mantelrohre ausschließlich durch Reibung in Längsrichtung mitgenommen. Dabei kann undefiniertes Durchrutschen auftreten, und insbesondere nach wiederholtem Verstellen können die zwischengelagerten Teleskopelemente in derselben Einstellung der Lenksäule in unterschiedliche Positionen in Achsrichtung relativ zu den Mantelrohren wandern. Ein Nachteil durch dieses unkontrollierte Wandern ist, dass die Manteleinheit in derselben Längeneinstellung je nach Relativposition der zwischengelagerten Teleskopelemente eine unterschiedliche Steifigkeit haben kann. Außerdem kann die erforderliche Verstellkraft durch unkontrollierten Längsanschlag von Zwischenelementen in nachteiliger Weise schwanken.

Eine gattungsgemäße Lenksäule ist aus der DE 10 2004 014506 A1 bekannt. Diese ermöglicht jedoch nur ein eingeschränktes Verstellverhalten.

Angesichts der vorangehend erläuterten Problematik ist es eine Aufgabe der vorliegenden Erfindung, eine Lenksäule bereitzustellen, die ein verbessertes Verstellverhalten aufweist.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung erstreckte Längsachse drehbar gelagert ist, wobei die Manteleinheit die mindestens drei in Längsrichtung relativ zueinander verstellbare, teleskopartig geführte Teleskopelemente aufweist, wobei eine Positioniereinrichtung zur Synchronisierung der Relativbewegung einen Synchronrotor aufweist, welcher um eine quer zur Längsachse liegende Rotorachse drehbar gelagert ist und mit seinem Außenumfang an mindestens einem Teleskopelement in Längsrichtung abrollbar ist, ist erfindungsgemäß vorgesehen, dass der Synchronrotor mindestens ein erstes Synchronrad und ein zweites Synchronrad aufweist, die drehfest miteinander verbunden sind, wobei das erste Synchronrad einen ersten Wälzkreisdurchmesser hat und an einem ersten Teleskopelement abrollbar ist, und das zweite Synchronrad einen zweiten Wälzkreisdurchmesser hat und an einem zweiten Teleskopelement abrollbar ist, wobei der erste Wälzkreisdurchmesser unterschiedlich zum zweiten Wälzkreisdurchmesser ist.

Dank der erfindungsgemäßen Positioniereinrichtung kann eine Zwangspositionierung der drei Teleskopelementen erzeugt werden, und die relative Längsbewegung der drei Teleskopelement wird synchronisiert, so dass sich die Teleskopelemente auch nach mehreren Verstellzyklen in einer zuvor konstruktiv festgelegten Position zueinander befinden und es nicht wie im Stand der Technik zu einem undefinierten Wandern eines Teleskopelements relativ zu den anderen beiden Teleskopelementen kommt. Dank der erfindungsgemäßen Lösung kann somit die Steifigkeit der Lenksäule gesteigert und das Verstellverhalten verbessert werden.

In einer vorteilhaften Weiterbildung sind die Teleskopelemente der Manteleinheit ineinander geführt.

Erfindungsgemäß ist somit eine Synchronradanordnung mit mindestens zwei oder mehr drehfest miteinander verbundenen Synchronrädern vorgesehen, die unterschiedliche Wälzkreisdurchmesser haben. Beispielsweise können zwei, drei oder mehr Synchronräder auf einer gemeinsamen Rotor- oder Synchronwelle angebracht sein.

Es werden durch die unterschiedlichen Durchmesser der Wälzkreise (Wälzkreisdurchmesser) von den mindestens zwei Synchronrädern beim Abrollen um einen bestimmten Abrollwinkel unterschiedliche Abrollwege in Längsrichtung zurückgelegt. Dabei bezeichnet der Abrollweg eines Synchronrads die Streckenlänge in Längsrichtung, um welche sich die Rotorachse für einen gegebenen Abrollwinkel in Längsrichtung relativ zu dem Teleskopelement bewegt, an dem das betreffende Synchronrad mit seinem Außenumfang abrollt. Der beim Abrollen wirksame Durchmesser des Außenumfangs ist definiert als der Wälzkreisdurchmesser. Für einen gegebenen Abrollwinkel α ergibt sich der Abrollweg I aus dem Produkt mit dem Wälzkreisdurchmesser d zu: I = d * α. Folglich kann durch die Erfindung in vorteilhafter Weise das Verhältnis zwischen unterschiedlichen relativen Verstellwegen der Teleskopelemente, welche den relativen Abrollwegen von durch den Synchronrotor miteinander synchronisierten Teleskopelementen entsprechen, einfach durch das Verhältnis der Wälzkreisdurchmesser der Synchronräder vorgegeben werden. Vorteilhaft ist dabei, dass das Verhältnis frei gewählt werden kann, um beispielsweise eine andere als eine fest vorgegebene mittige relative Positionierung zwischen koaxial benachbarten Teleskopelementen zu realisieren.

Ein weiterer besonderer Vorteil dieser Weiterbildung ist, dass durch einen Synchronrotor einfach und mit geringem konstruktiven Aufwand die relative Längsbewegung von drei und mehr Teleskopelementen miteinander synchronisiert werden kann. Jedes der Synchronräder kann jeweils an einem Teleskopelement abrollen, oder auch an zwei Teleskopelementen, beispielsweise auf der Außenseite eines inneren Teleskopelements und der Innenseite eines äußeren Teleskopelements. Ein weiteres Teleskopelement kann einen Synchronträger aufweisen oder als solcher ausgebildet sein, in dem der Synchronrotor um eine Synchronachse drehbar gelagert sein, so dass die Synchronachse beim Verstellen zusammen mit dem Teleskopelement linear bewegbar ist. Somit können durch einen einzigen erfindungsgemäßen Synchronrotor mit zwei Synchronrädern bereits fünf Teleskopelemente miteinander synchronisiert werden, mit drei Synchronräderns sieben Teleskopelemente, und allgemein mit einer Anzahl von n Synchronrädern eine Teleskopanordnung mit (2*n+1) Teleskopelementen. Dadurch ist es problemlos möglich, eine kontrollierte, synchronisierte Verstellung von Mehrfachteleskopen mit zusätzlichen Wälzkörper- oder Gleiteinheiten zu realisieren, wobei nur ein Synchronrotor erforderlich ist, oder eine geringe Anzahl. Dadurch kann der Fertigungs- und Montageaufwand reduziert werden, und auch das Gewicht und die Abmessungen einer verstellbaren Lenksäule können in vorteilhafter Weise verringert werden.

Es kann vorgesehen sein, dass zwei oder mehr Synchronräder jeweils an einem Teleskopelement abrollen, oder sämtliche oder auch nur ein Teil der Synchronräder jeweils an zwei Teleskopelementen abrollen. Auf diese Weise kann eine größere Anzahl von Teleskopelementen mit geringerem konstruktiven und baulichen Aufwand miteinander zwangsgekoppelt und synchronisiert werden, als mit dem einzelnen Synchronrad im Stand der Technik.

Eine vorteilhafte Ausführung ist, dass mindestens ein Synchronrad als Zahnrad ausgebildet ist. Das Zahnrad kann beispielsweise als Stirnrad mit außen umlaufender Verzahnung ausgebildet sein und in mindestens eine korrespondierende Zahnstange eingreifen, die sich in Längsrichtung an einem Teleskopelement erstreckt. Ein Zahnrad kann gleichzeitig in zwei Zahnstangen eingreifen, die beispielsweise außen an einem inneren Teleskopelement und innen an einem äußeren Teleskopelement angebracht oder ausgebildet sein können. Durch die ineinander greifenden Verzahnungen wird ein Formschlusseingriff erzeugt, so dass das Zahnrad praktisch schlupffrei an der Zahnstange, und damit an dem korrespondierenden Teleskopelement abrollen kann. Der für die Bestimmung des Abrollwegs relevante Wälzkreisdurchmesser kann in an sich bekannter Weise durch den Zahnraddurchmesser, Modul und Verzahnungsgeometrie, beispielsweise eine Evolventenverzahnung, vorgegeben werden. Der Einsatz von Zahnrädern hat den Vorteil, dass eine präzise, schlupffreie und belastbare Zwangskopplung ermöglicht wird, so dass die Synchronisierung mit einer hohen Funktions- und Betriebssicherheit erfolgt.

Der Fertigungs- und Montageaufwand kann ebenfalls vorteilhaft gering gehalten werden. Beispielsweise kann eine Zahnstange in ein Teleskopelement eingeformt werden, beispielsweise auch einstückig durch plastische Formgebung oder spanende Bearbeitung, so dass eine leichte und kompakte Bauform realisierbar ist. Es ist auch denkbar und möglich, eine Zahnstange separat zur Verfügung zu stellen und nachträglich an einem Teleskopelement zu montieren. Beispielsweise kann die Zahnstange als Spritzgussteil ausgebildet sein, beispielsweise aus einem thermoplastischen Kunststoff. Diese Zahnstange kann dann mit dem Teleskopelement verbunden werden, beispielsweise mittels einer Clipverbindung, bei der eine Rastzunge der Zahnstange in eine korrespondierende Ausnehmung des Teleskopelements eingreift.

Es ist möglich, dass mindestens ein Synchronrad als Reibrad ausgebildet ist. Ein Reibrad kann mit seinem Außenumfang reibschlüssig, d.h. kraftschlüssig auf einer linearen Rollbahn am korrespondierenden Teleskopelement abrollen. Der Außendurchmesser des Reibrads ist dabei identisch mit dem Wälzkreisdurchmesser. Um Schlupf zu vermeiden, kann das Reibrad zumindest an seinem abrollbaren Außenumfang ganz oder teilweise reibungserhöhend ausgestaltet sein. Zusätzlich oder alternativ kann das Teleskopelement im Bereich der Rollbahn, an der das Reibrad mit seinem Außenumfang abrollbar ist, ganz oder teilweise reibungserhöhend ausgestaltet sein. Eine reibungserhöhende Ausgestaltung kann beispielsweise durch eine Aufrauhung der Oberfläche erfolgen, wie Prägen, Rädeln oder dergleichen, und zusätzlich oder alternativ durch eine reibungserhöhende Beschichtung, beispielsweise eine Gummierung oder dergleichen. Derartige Reibräder können mit geringem Fertigungs- und Montageaufwand bereitgestellt werden, und auch die korrespondierenden Rollbahnen können einfach durch in Längsrichtung erstreckte Flächen, Bahnen, Schienen oder dergleichen erzeugt werden.

Es kann vorgesehen sein, dass der Synchronrotor an einem Synchronträger drehbar gelagert ist, der durch ein Teleskopelement gebildet ist. Dabei ist ein Synchronrotor an einem der Teleskopelemente drehbar gelagert, und die Synchronräder sind an zwei oder mehr anderen Teleskopelementen abrollbar. Dadurch wird die Relativbewegung des den Synchronträger bildenden Teleskopelements mit den anderen Teleskopelementen zwangsgekoppelt und synchronisiert.

Alternativ ist es möglich, dass der Synchronrotor an einem Synchronträger drehbar gelagert ist, der relativ zu den Teleskopelementen bewegbar angeordnet ist. Der Synchronträger kann beispielsweise eine Lagereinheit umfassen, die relativ zu den Teleskopelementen in Längsrichtung frei bewegbar ist, und kann bevorzugt in der möglichen Bewegungsrichtung geführt sein. Die Zwangskopplung erfolgt in dieser Bauform ausschließlich über das Abrollen der Synchronräder an den betreffenden Teleskopelementen, so dass mit n Synchronrädern (2*n) Teleskopelemente miteinander synchronisiert werden können, wenn jedes einzelne Synchronrad jeweils an zwei Teleskopelementen abrollt.

Wenn die Synchronräder ausschließlich über ihren abrollbaren Außenumfang mit den Teleskopelementen zusammenwirken, kann der Synchronträger von den Teleskopelementen separat ausgebildet sein. In dieser Ausführung ist keines der Synchronräder an einem Teleskopelement drehbar gelagert. Mit anderen Worten ist die gemeinsame Synchronachse der Synchronrädern eines Synchronrotors in Längsrichtung relativ zu den Teleskopelementen bewegbar. Ein Vorteil dieses unabhängigen Synchronträgers ist, dass allein durch die Verhältnisse der Wälzkreisdurchmesser der Synchronräder nahezu beliebige Bewegungsverhältnisse der Teleskopelemente frei vorgegeben werden können.

Es kann vorgesehen sein, dass die Synchronachse tangential zwischen zwei Teleskopelementen angeordnet ist. Die Synchronräder können dadurch auf einer radialen Innenseite oder Außenseite an den Teleskopelementen abrollen. Eine Synchronachse kann parallel zu einer Tangente relativ zum Umfang eines im wesentlichen rohrförmigen Teleskopelements angeordnet sein. Ein Synchronrad kann dann an einem oder beiden koaxial benachbarten Teleskopelementen abrollbar sein. Die mit den Synchronrädern korrespondierenden Zahnstangen oder Rollbahnen erstrecken sich dabei in Längsrichtung parallel zu Tangentialebenen. Es ist auch möglich, dass ein Synchronrad eines Synchronrotors nur abrollbar zwischen zwei koaxial benachbarten Teleskopelementen angeordnet ist, d.h. kein den Synchronrotor drehbar lagerndes Teleskopelement vorgesehen ist. Ein weiteres Synchronrad des Synchronrotors kann durch radiale Öffnungen oder Aussparungen in dem oder den benachbarten Teleskopelementen hindurch erstrecken, und an weiteren, koaxial weiter außen oder innen liegenden Teleskopelementen abrollbar sein.

Es ist auch möglich, dass die Synchronachse im Wesentlichen radial durch mindestens drei Teleskopelemente hindurchgeht. Die Synchronräder sind dabei bevorzugt so angeordnet, dass sie jeweils an einer in einem radialen Durchgang eines jeweiligen Teleskopelements angeordneten oder ausgebildeten Zahnstange oder Rollbahn in Längsrichtung abrollbar sind. Vorteil dieser Anordnung ist, dass es möglich ist, sämtliche Synchronräder, die mit einer Mehrzahl, bevorzugt sämtlichen Teleskopelementen abrollbar zusammenwirken, zusammen drehfest gekoppelt auf einer Synchronwelle anzubringen. Dadurch kann auch bei einer Manteleinheit mit einer Mehrzahl von Teleskopelementen eine einfache Bauweise mit einem oder wenigen Synchronrotoren realisiert werden.

Die Teleskopelemente können mindestens ein Mantelrohr umfassen, welches ein Außen-, Innen- oder Zwischenmantelrohr einer Manteleinheit sein kann. Ein Teleskopelement kann auch eine zwischen zwei Mantelrohren angeordnete Wälzlagereinheit oder Gleiteinheit umfassen. In sämtlichen Ausführungen kann ein Synchronrotor an einem Mantelrohr oder einer dazwischen angeordneten Wälzlager- oder Gleiteinheit gelagert sein, oder frei abrollbar, d.h. nicht in einem Teleskopelement drehbar gelagert, zwischen koaxial benachbarten Teleskopelementen abrollbar sein.

Die Teleskopelemente - Mantelrohre oder koaxial dazwischen angeordnete Zwischenelemente wie Wälzlager- oder Gleiteinheiten - können bevorzugt rohrförmig mit einem runden oder unrunden Profilquerschnitt ausgebildet sein. Ein unrunder Profilquerschnitt kann beispielsweise drei-, vier-, sechs-, acht- oder mehrkantig ausgebildet sein. Bei einem derartigen mehrkantigen Profil kann ein erfindungsgemäßer Synchronrotor bevorzugt im Bereich einer flächenhaft erstreckten, im Wesentlichen ebenen Seitenwand angeordnet sein. Dort kann auch eine Zahnstange angeordnet oder in der Wandung des Mantelrohrs integriert ausgebildet sein. Alternativ kann die Seitenwand eine Rollbahn für ein Synchronrad aufweisen. Auch bei der Ausbildung der Teleskopelemente mit einem unrunden Profilquerschnitt sind diese nicht zur Drehmomentenübertragung bestimmt. Darin unterscheiden sich die Teleskopelemente wesentlich von der Lenkspindel, denn die Lenkspindel überträgt das durch den Fahrer eingetragene Lenkmoment. Die Teleskopelemente bilden somit keine Drehmoment übertragende Lenkspindel oder Lenkwelle aus, sondern nehmen die Lenkspindel in sich drehbar auf oder tragen diese.

Es ist zweckmäßig, dass die Manteleinheit eine Lenkspindellagereinheit aufweist. Die Lenkspindellagereinheit umfasst ein oder mehrere Lager, in denen die Lenkspindel relativ zu einem oder mehreren Mantelrohren drehbar gelagert ist. Bevorzugt sind derartige Lager, welche Wälz- und Gleitlager umfassen können, mindestens in einem Innenmantelrohr und/oder einem Außenmantelrohr angeordnet.

Die Lenkspindel ist vorzugsweise längenverstellbar ausgebildet, beispielsweise durch in Längsrichtung teleskopierbare Lenkspindelabschnitte.

Zur Verstellung der Lenksäule kann vorgesehen sein, dass ein motorischer Verstellantrieb an zwei der Teleskopelemente angreift, um die Mantelrohre zumindest in Längsrichtung relativ zueinander zu verstellen. Der Verstellantrieb kann beispielsweise an dem koaxial außen liegenden Außenmantelrohr einer Manteleinheit, und an dem koaxial innen liegenden Innenmantelrohr angreifen, um diese zum Verstellen in Längsrichtung auseinander zu ziehen, oder zusammen zu schieben. Dabei kann die Relativbewegung von koaxial zwischen Innen- und Außenmantel teleskopierbar angeordneten Teleskopelementen durch einen erfindungsgemäßen Synchronrotor synchronisiert werden. Es ist auch denkbar und möglich, dass der Verstellantrieb an zwei beliebigen, synchronisierten und damit zwangsgekoppelten Teleskopelementen angreift, wodurch ebenfalls sämtliche miteinander synchronisiert gekoppelten Teleskopelemente verstellt werden können.

Der Verstellantrieb kann einen Spindeltrieb umfassen, mit einer auf einer Gewindespindel angeordneten Spindelmutter, und einem Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Teleskopelement, wie einem Mantelrohr, beispielsweise dem Innen- oder Außenmantelrohr, in Richtung der Längsachse unverschieblich angebracht, und die Gewindespindel an einem dazu teleskopierbaren anderen Mantelrohr, dem Außen- oder Innenmantelrohr. Von dem elektrischen Antriebsmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung die Teleskopelemente in Längsrichtung zusammen- oder auseinanderbewegt.

### Beschreibung der Zeichnungen

- Figur 1: eine erfindungsgemäße Lenksäule in einer schematischen perspektivischen Ansicht,
- Figur 2: einen Längsschnitt durch die Lenksäule gemäß Figur 1,
- Figur 3: einen Querschnitt A-A durch die Lenksäule gemäß Figur 2,
- Figur 4: einen vergrößerten Ausschnitt aus Figur 3,
- Figur 5: einen Querschnitt durch die Lenksäule in einer zweiten Ausführung,
- Figur 6: einen vergrößerten Ausschnitt aus Figur 5,
- Figur 7: einen Querschnitt durch eine Lenksäule in einer dritten Ausführung,
- Figur 8: eine vierte Ausführungsform einer erfindungsgemäßen Lenksäule in einer schematischen perspektivischen Ansicht,
- Figur 9: eine vergrößerte Detailansicht von Figur 8,
- Figur 10: eine teilweise demontierte schematische perspektivische Ansicht der Lenksäule gemäß Figur 8,
- Figur 11: eine freigestellte Detailansicht eines erfindungsgemäßen Synchronrotors der Lenksäule gemäß Figur 8,
- Figur 12: einen Querschnitt durch die Lenksäule gemäß Figur 8.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

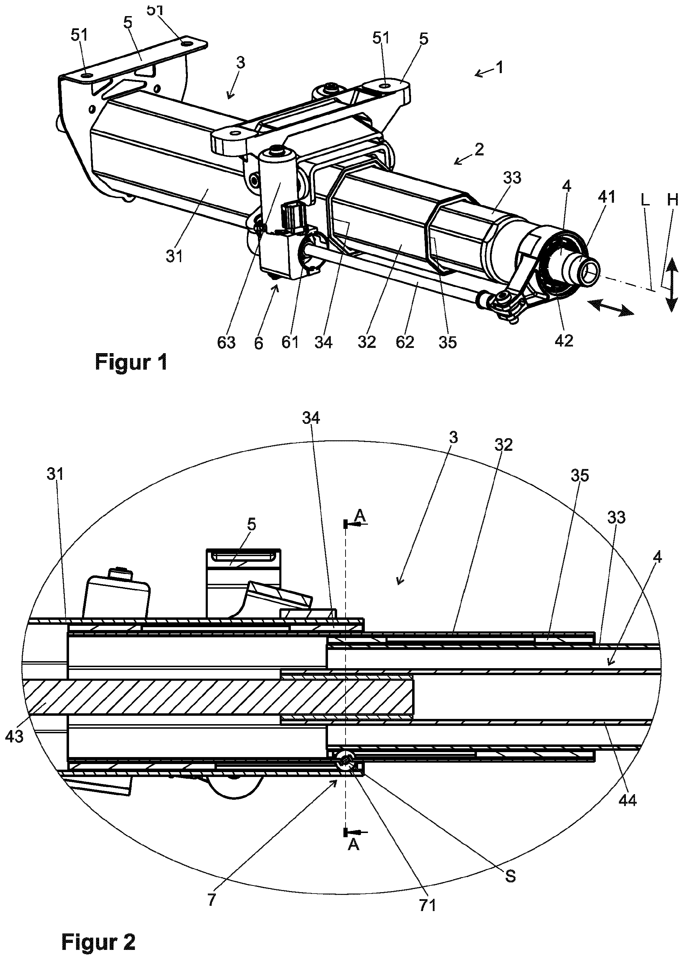

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein mittleres Mantelrohr oder Zwischenmantelrohr 32 und ein Innenmantelrohr 33 aufweist, die in Ihrer Gesamtheit als Mantelrohre 31, 32, und 33 bezeichnet werden. Das Außenmantelrohr 31, das Zwischenmantelrohr 32 und das Innenmantelrohr 33 bilden Teleskopelemente im Sinne der Erfindung. Diese sind in Längsrichtung, die der Richtung einer Längsachse L entspricht, teleskopierend verschiebbar, koaxial ineinander angeordnet, wie mit dem Doppelpfeil angedeutet. Dabei bildet das Zwischenmantelrohr 32 ein Zwischenelement im Sinne der Erfindung.

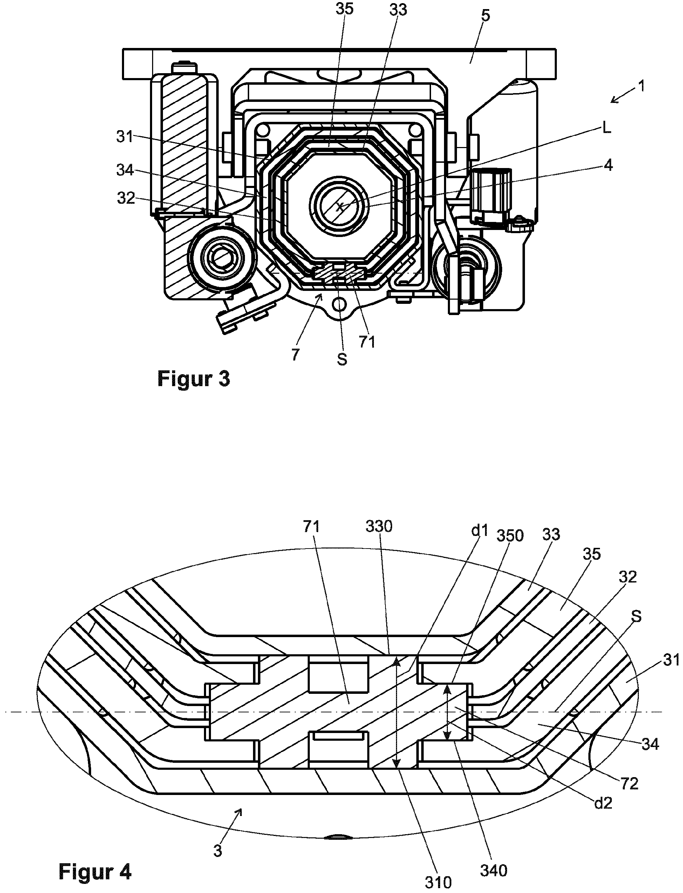

Koaxial zwischen den Mantelrohren 31 und 32 ist eine teleskopierbare Lagereinheit 34 angeordnet, die als Wälzlagereinheit oder Gleitbuchse ausgebildet sein kann. Koaxial zwischen den Mantelrohren 32 und 33 ist eine teleskopierbare Lagereinheit 35 angeordnet, die als Wälzlagereinheit oder Gleitbuchse ausgebildet sein kann. Eine als Wälzlagereinheit ausgebildete Lagereinheit 34 oder 35 kann einen rohrprofilförmigen Wälzlagerkäfig umfassen, der - wie in der Schnittdarstellung von Figur 3 und Figur 4 erkennbar - koaxial zwischen den Mantelrohren 32 und 33 angeordnet ist und in dem in Längsrichtung an den Mantelrohren 32 und 33 abwälzbare Wälzkörper drehbar gelagert sein können. Ohne die Wälzkörper kann alternativ auch eine rohrprofilförmige Gleitbuchse vorgesehen sein.

Die Mantelrohre 31, 32, 33 und die Lagereinheiten 34, 35 sind teleskopartig ineinander geschachtelt angeordnet und bilden Teleskopelemente im Sinne der Erfindung. Im gezeigten Beispiel sind die Teleskopelemente 31, 32, 33, 34, 35 als Achteck-Rohrabschnitte ausgebildet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist. Die Lenkspindel 4 ist in dem Mantelrohr 33 in einer Lenkspindellagereinheit 42 gelagert, die bevorzugt ein Wälzlager aufweisen kann. Ein weitere, gleichartig gestaltetet, hier nicht sichtbare Lenkspindellagereinheit kann bevorzugt in dem Außenmantelrohr 31 angeordnet sein.

Die Manteleinheit 3 ist in einer zweiteiligen Trageinheit 5 gehalten, welche Befestigungsmittel 51 in Form von Öffnungen zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Längsrichtung in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

In Figur 1 ist eine Verstellposition der Lenksäule 1 in einer Bedienstellung gezeigt, bei der das Zwischenmantelrohr 32 und das Innenmantelrohr 33 in Längsrichtung nach hinten bezogen auf die Fahrtrichtung des Kraftfahrzeugs - in der Zeichnung nach rechts - zumindest teilweise aus dem Außenmantelrohr 31 herausgefahren sind, so dass sich ein an dem Anschlussabschnitt 41 angebrachtes Lenkrad im Bedienbereich zur Eingabe von Lenkbefehlen befindet.

Die Manteleinheit 3 ist im Längsschnitt entlang der Längsachse L in Figur 2 gezeigt. Darin ist die koaxiale, teleskopartige Anordnung der Teleskopelemente 31, 32, 33, 34, 35, umfassend die Mantelrohre 31, 32, 33 und die Lagereinheiten 34, 35, erkennbar.

Die Lenkspindel 4 ist ebenfalls in Längsrichtung verstellbar ausgestaltet, und weist dazu eine Innenwelle 43 auf, die teleskopartig in eine Außenwelle 44 eintaucht. Durch ein unrundes Profil ist diese Verbindung in an sich bekannter Weise drehmomentschlüssig ausgestaltet.

Eine erfindungsgemäße Positioniereinrichtung 7 weist einen Synchronrotor 71 auf, der um die Synchronachse S drehbar in dem Mantelrohr 32 (Zwischenmantelrohr) gelagert ist, wie in Figur 4 erkennbar ist.

Der Synchronrotor 71 weist ein erstes Synchronrad 72 auf, welches einen ersten Wälzkreisdurchmesser d1 hat, und mit einem zweiten Synchronrad 73 drehfest verbunden ist, welches im Beispiel einen kleineren Wälzkreisdurchmesser d2 hat.

Das Synchronrad 72 rollt mit seinem Außenumfang an einer innen an dem Mantelrohr 31 (Außenmantelrohr) ausgebildeten Rollbahn 310 ab, und an einer außen an dem Mantelrohr 33 (Innenmantelrohr) ausgebildeten Rollbahn 330. Das Synchronrad 73 rollt mit seinem Außenumfang an einer innen an der Lagereinheit 34, beispielsweise einem Wälzlagerkäfig, ausgebildeten Rollbahn 340 ab, und an einer außen an der Lagereinheit 35 ausgebildeten Rollbahn 350.

Die Synchronräder 72 und 73 können als Zahnräder mit einer außen umlaufenden Stirnverzahnung ausgebildet sein, die in die als korrespondierende Zahnstangen ausgebildeten Rollbahnen 310, 330, 340, 350 eingreifen. Dadurch rollen die Synchronräder 72, 73 beim Verstellen schlupffrei in Längsrichtung an den Teleskopelementen 31, 33, 34, 35 ab.

Durch den Synchronrotor 71 sind die Teleskopelemente 31, 32, 33, 34, 35 bezüglich ihrer relativen Bewegung in Längsrichtung zwangsgekoppelt, und dadurch synchronisiert. Wenn das Mantelrohr 33 relativ zum Mantelrohr 31 um einen Verstellweg w bewegt wird, beispielsweise in Figur 4 auf den Betrachter zu herausgezogen wird, oder in Figur 2 nach rechts heraus, rollt das Synchronrad 72 dazwischen ab und nimmt das Mantelrohr 32 um den halben Verstellweg w/2 mit, so dass es sich immer mittig zwischen den Mantelrohren 31 und 33 befindet. Durch das Synchronrad 73 wird die Lagereinheit 35 bezüglich des Mantelrohrs 32 in Richtung auf des Mantelrohrs 33 mitbewegt, aber um einen Bruchteil d2/d1 des Verhältnisses der Wälzkreisdurchmesser weniger als das Mantelrohr 33. Ist d2/d1 beispielsweise 0,5, so wird die Lagereinheit halb so weit mitbewegt und befindet sich immer in der Mitte zwischen den Mantelrohren 33 und 32. Analog wird die ebenfalls mit dem Synchronrad 73 in Eingriff stehende Lagereinheit 34 in die entgegengesetzte Richtung bewegt, so dass diese sich immer mittig zwischen den Mantelrohren 31 und 32 befindet.

Auf diese Weise können mittels eines einzigen erfindungsgemäßen Synchronrotors 71 sämtliche Teleskopelemente 31, 32, 33, 34, 35 synchronisiert werden.

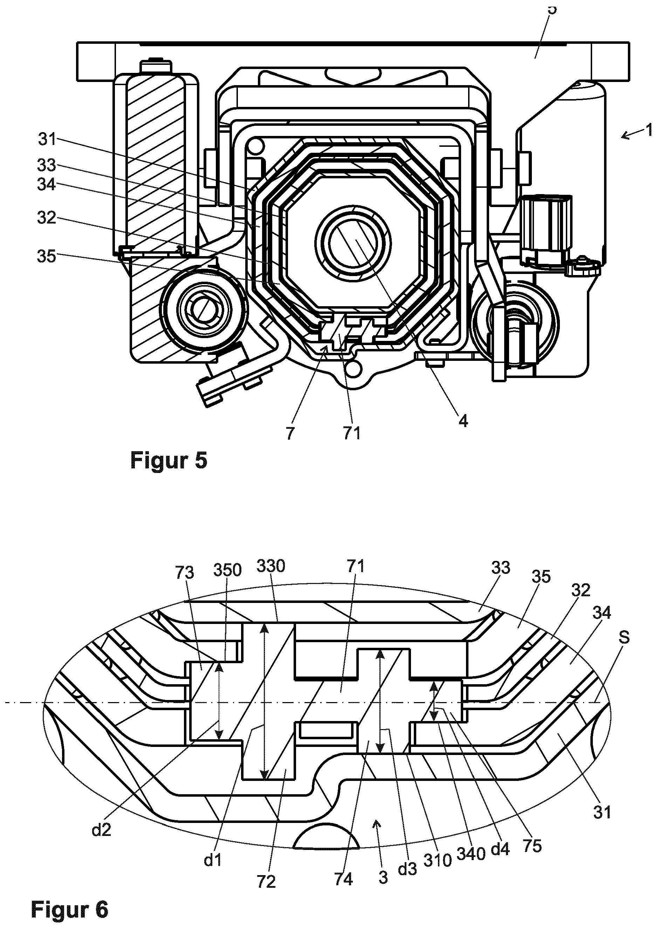

Die in Figur 5 in derselben Ansicht wie in Figur 3 gezeigte Ausführung, die in Figur 6 wie in Figur 4 vergrößert wiedergegeben ist, zeichnet sich dadurch aus, dass der Synchronrotor 71 insgesamt vier drehfest miteinander verbundene Synchronräder 72, 73, 74, 75 aufweist.

Der Synchronrotor 71 ist an dem Mantelrohr 32 (Zwischenmantelrohr) um die Synchronachse S drehbar gelagert.

Das Synchronrad 72 hat einen Wälzkreisdurchmesser d1 und rollt nur an dem Mantelrohr 33 (Innenmantelrohr) ab, an der Rollbahn 330.

Das Synchronrad 73 hat einen Wälzkreisdurchmesser d2 und rollt nur an der zwischen den Mantelrohren 32 und 33 angeordneten Lagereinheit 35 ab, beispielsweise an einem Wälzkörperkäfig einer Wälzkörpereinheit, an der Rollbahn 350.

Das Synchronrad 74 hat einen Wälzkreisdurchmesser d3 und rollt nur an dem Mantelrohr 31 (Außenmantelrohr) ab, an der Rollbahn 310.

Das Synchronrad 75 hat einen Wälzkreisdurchmesser d4 und rollt nur an der zwischen den Mantelrohren 32 und 31 angeordneten Lagereinheit 34 ab, beispielsweise an einem Wälzkörperkäfig, an der Rollbahn 340.

Durch die Verhältnisse der Wälzkreisdurchmesser d1:d2:d3:d4, die wie im gezeigten Beispiel alle unterschiedlich sein können, können die Verhältnisse der relativen Bewegungen der Teleskopelemente 31, 32, 33, 34, 35 beim Verstellen zwangsgekoppelt vorgegeben und damit synchronisiert werden.

Die Synchronräder 72, 73, 74, 75 können auch als Reibräder ausgebildet sein, die mit ihrem Außenumfang reibschlüssig in Längsrichtung an den Teleskopelementen 31, 33, 34, 35 abrollen.

Die Synchronräder 72, 73, 74, 75 können auf einer gemeinsam durchgehenden Welle drehfest gekuppelt sein. Es ist auch denkbar und möglich, sämtliche Synchronräder 72, 73, 74, 75 einstückig auszubilden, beispielsweise als Kunststoff-Spritzgussteil oder aus Metallguss.

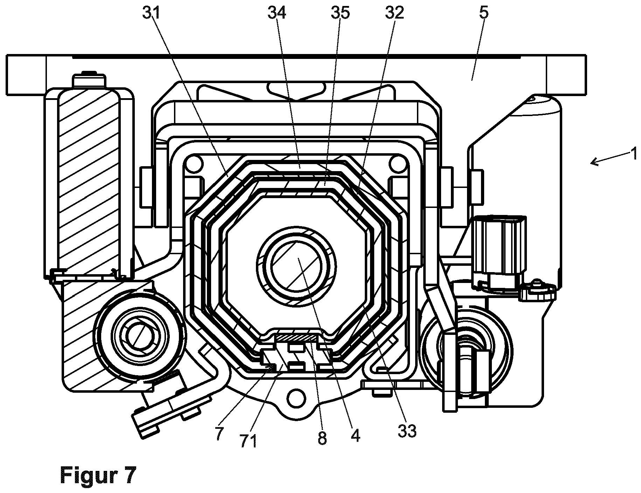

Figur 7 zeigt eine Weiterbildung in einer Schnittansicht wie Figur 4 oder 5, wobei der Synchronrotor 71 gleichartig zu den beschriebenen Ausführungen, beispielsweise in Figur 4 oder 6, ausgebildet sein kann. Darin ist die Laufbahn, an der der Synchronrotor 71 mit dem Synchronrad 72 an dem Mantelrohr 33 (Innenmantelrohr) abrollt, als Crashelement 8 ausgebildet. Ein derartiges Crashelement 8 kann beispielsweise eine Zahnstange umfassen, die über eine Energieabsorptionseinrichtung mit dem Mantelrohr 33 verbunden ist, oder selbst als Teil einer Energieabsorptionsvorrichtung ausgebildet ist. Beispielsweise kann das Crashelement 8 ein Element oder Material umfassen, welches im Crashfall, wenn durch einen auf die Lenksäule 1 aufprallenden Körper oder Gegenstand eine hohe Kraftspitze in Längsrichtung auf die Manteleinheit 3 wirkt, bei einer relativen Längsbewegung des Synchronrotors 71 zu den Teleskopelemente 31, 32, 33, 34, 35 plastisch deformiert wird und dadurch kinetische Crashenergie absorbiert und in Verformung und Wärme umwandelt. Beispielweise kann das Crashelement 8 eine Verzahnung aus einem Weichmaterial aufweisen, welches durch ruckartiges, nicht synchronisiertes Durchrutschen des Synchronrads 72 im Crashfall plastisch aufgerissen oder gequetscht wird.

Ein oder mehrere Crashelemente 8 können auch an anderen oder weiteren Teleskopelementen 31, 32, 33, 34, 35 angeordnet oder ausgebildet sein. Es können zwischen dem Crashelement 8 und dem oder den Teleskopelementen 31, 32, 33, 34, 35 auch an sich bekannte Energieabsorptionselemente angeordnet sein, beispielsweise Dehnungs-, Biege-Quetsch- und/oder Reißelemente, die bei einer nur im Crashfall auftretenden Relativbewegung in Längsrichtung unter Energieabsorption plastisch deformiert werden.

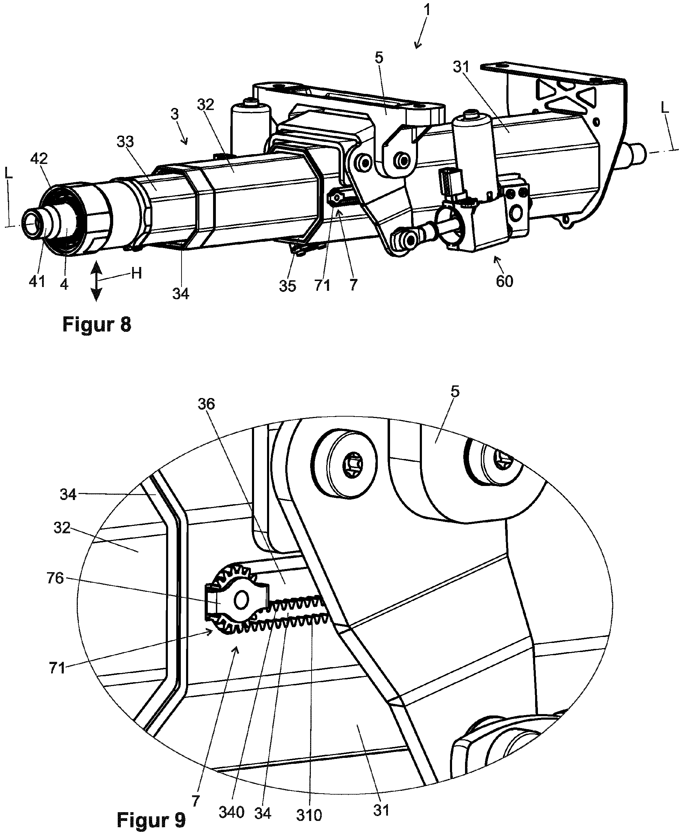

Figur 8 zeigt eine weitere mögliche Ausführung einer Lenksäule 1 in einer perspektivischen Gesamtansicht, und Figur 9 eine vergrößerte Darstellung einer erfindungsgemäßen Positioniereinrichtung 7 in einer alternativen Ausführung. Für gleichwirkende Teile werden dabei dieselben Bezugszeichen verwendet.

Ein elektromotorischer Verstellantrieb 60, der ähnlich ausgebildet sein kann wie der Verstellenantrieb 6, ist zwischen der Manteleinheit 3 und der Trageinheit 5 angeordnet, und ermöglicht eine Höhenverstellung der Manteleinheit 3 in der Höhenrichtung H.

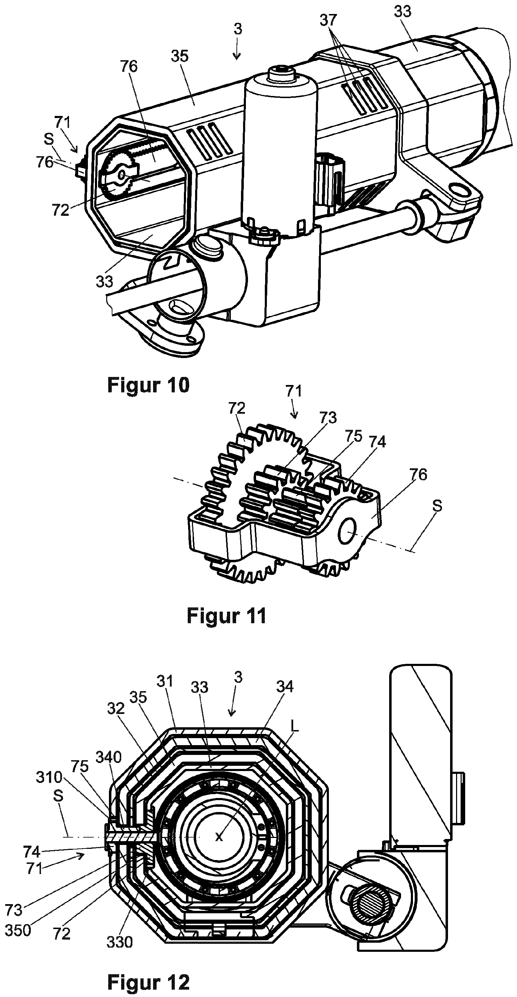

Die Positioniereinrichtung 7 weist einen Synchronrotor 71 auf, der in Figur 11 separat freigestellt gezeigt ist. Dieser weist insgesamt vier drehfest miteinander verbundene Synchronräder 72, 73, 74, 75 auf, die um ihre gemeinsame Synchronachse S in einem Synchronträger 76 drehbar gelagert sind.

Der Synchronrotor 71 erstreckt sich mit der Synchronachse S durch eine die Teleskopelemente 31, 32, 33, 34, 35 durchsetzende radiale Öffnung 36. Jeweils an einem Längsrand der Öffnung 36 sind Rollbahnen 310, 330, 340, 350 angeordnet, welche in dieser Ausführung als Zahnstangen ausgebildet sind, deren Verzahnungen in Umfangsrichtung bezüglich der Längsachse L in die Teleskopelemente 31, 32, 33, 34, 35 eingeformt sind.

Der Synchronträger 76 ist in der Öffnung 76 in Längsrichtung geführt, wobei die Synchronräder 72, 73, 74, 75 mit den Rollbahnen 310, 330, 340, 350 in Verzahnungseingriff stehen. Dadurch wird eine relative Zwangspositionierung der Teleskopelemente 31, 32, 33, 34, 35 in Längsrichtung realisiert, also eine Synchronisierung. Dabei bewegt sich die Synchronachse S zusammen mit dem Synchronträger 76, der mit keinem der Teleskopelemente 31, 32, 33, 34, 35 fest verbunden ist, sondern mit diesen nur über die Synchronräder 72, 73, 74, 75 gekoppelt ist.

Die radiale Anordnung des Synchronrotors 71, der die Teleskopelemente 31, 32, 33, 34, 35 durch die Öffnung 76 radial durchsetzt, ist in dem Querschnitt von Figur 12 deutlich erkennbar.

Figur 10 zeigt eine teilweise geöffnete Darstellung der Manteleinheit 3, in der die radiale Anordnung des Synchronrotors 71 in der Öffnung 76 verdeutlicht ist. Darin ist ebenfalls erkennbar, wie Wälzkörper 37 in der als Wälzkörpereinheit ausgebildeten Lagereinheit 35 drehbar angeordnet sind, die sich beim Verstellen an den Mantelrohren 32 und 33 abwälzen können.

Es kann in einer nicht dargestellten Ausführungsform kann vorgesehen sein, Zahnräder und Reibräder als Synchronräder in einer einzigen Ausführung miteinander kombiniert einzusetzen.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34, 35: Lagereinheit
- 36: Öffnung
- 37: Wälzkörper
- 310, 330, 340, 350: Rollbahnen
- 4: Lenkspindel
- 41: Anschlussabschnitt
- 42: Lenkspindellagereinheit
- 43: Innenwelle
- 44: Außenwelle
- 5: Trageinheit
- 51: Befestigungsmittel
- 6, 60: Verstellantrieb
- 61: Spindelmutter
- 62: Gewindespindel
- 63: Motor
- 7: Positioniereinrichtung
- 71: Synchronrotor
- 72, 73, 74, 75: Synchronräder
- 76: Synchronträger
- 8: Crashelement
- L: Längsachse
- H: Höhenrichtung
- S: Synchronachse
- d1, d2, d3, d4: Wälzkreisdurchmesser

## Patentansprüche

1. Lenksäule (1) für ein Kraftfahrzeug, umfassend eine Manteleinheit (3), in der eine Lenkspindel (4) um eine in Längsrichtung erstreckte Längsachse (L) drehbar gelagert ist , wobei die Manteleinheit (3) mindestens drei in Längsrichtung relativ zueinander verstellbare, teleskopartig geführte Teleskopelemente (31, 32, 33, 34, 35) aufweist, wobei eine Positioniereinrichtung (7) zur Synchronisierung der Relativbewegung einen Synchronrotor (71) aufweist, welcher um eine quer zur Längsachse liegende Rotorachse (S) drehbar gelagert ist und mit seinem Außenumfang an mindestens einem Teleskopelement (31, 32, 33, 34, 35) in Längsrichtung abrollbar ist,
**dadurch gekennzeichnet,**
**dass** der Synchronrotor (71) mindestens ein erstes Synchronrad (72) und ein zweites Synchronrad (73) aufweist, die drehfest miteinander verbunden sind, wobei das erste Synchronrad (72) einen ersten Wälzkreisdurchmesser (d1) hat und an einem ersten Teleskopelement (33) abrollbar ist, und das zweite Synchronrad (73) einen zweiten Wälzkreisdurchmesser (d2) hat und an einem zweiten Teleskopelement (35) abrollbar ist, wobei der erste Wälzkreisdurchmesser (d1) unterschiedlich zum zweiten Wälzkreisdurchmesser (d2) ist.

2. Lenksäule (1) nach Anspruch 1, **dadurch gekennzeichnet, dass** mindestens ein Synchronrad (72, 73, 74, 75) als Zahnrad ausgebildet ist.

3. Lenksäule (1) nach einem der vorangehenden Ansprüche, **dadurch gekennzeichnet, dass** mindestens ein Synchronrad (72, 73, 74, 75) als Reibrad ausgebildet ist.

4. Lenksäule (1) nach einem der vorangehenden Ansprüche, **dadurch gekennzeichnet, dass** der Synchronrotor (71) an einem Synchronträger drehbar gelagert ist, der durch ein Teleskopelement (31, 32, 33, 34, 35) gebildet ist.

5. Lenksäule (1) nach einem der vorangehenden Ansprüche, **dadurch gekennzeichnet, dass** der Synchronrotor (71) an einem Synchronträger (76) drehbar gelagert ist, der relativ zu den Teleskopelementen (31, 32, 33, 34, 35) bewegbar angeordnet ist.

6. Lenksäule (1) nach einem der vorangehenden Ansprüche, **dadurch gekennzeichnet, dass** keines der Synchronräder (72, 73, 74, 75) an einem Teleskopelement (31, 32, 33, 34, 35) drehbar gelagert ist.

7. Lenksäule (1) nach einem der vorangehenden Ansprüche, **dadurch gekennzeichnet, dass** die Synchronachse (S) tangential zwischen zwei Teleskopelementen (31, 32, 33, 34, 35) angeordnet ist.

8. Lenksäule (1) nach einem der vorangehenden Ansprüche 1 bis 6, **dadurch gekennzeichnet, dass** die Synchronachse (S) radial durch mindestens drei Teleskopelemente (31, 32, 33, 34, 35) hindurchgeht.

9. Lenksäule (1) nach einem der vorangehenden Ansprüche, **dadurch gekennzeichnet, dass** der Synchronrotor (71) sich radial durch mindestens ein Teleskopelement (31, 32, 33, 34, 35) hindurch erstreckt.

10. Lenksäule (1) nach einem der vorangehenden Ansprüche, **dadurch gekennzeichnet, dass** ein Teleskopelement (31, 32, 33, 34, 35) ein Mantelrohr (31, 32, 33) umfasst.

11. Lenksäule (1) nach einem der vorangehenden Ansprüche, **dadurch gekennzeichnet, dass** ein Teleskopelement (31, 32, 33, 34, 35) eine zwischen zwei Mantelrohren (31, 32, 33) angeordnete Wälzlagereinheit (34, 35) oder Gleiteinheit umfasst.

12. Lenksäule (1) nach einem der vorangehenden Ansprüche, **dadurch gekennzeichnet, dass** die Manteleinheit (3) eine Lenkspindellagereinheit (42) aufweist.

13. Lenksäule (1) nach einem der vorangehenden Ansprüche, **dadurch gekennzeichnet, dass** mindestens ein Synchronrad (72, 73, 74, 75) an zwei Teleskopelementen (31, 32, 33, 34, 35) abrollbar ist.

## Claims

1. Steering column (1) for a motor vehicle, comprising a sheath unit (3) in which a steering spindle (4) is mounted rotatably about a longitudinal axis (L) extending in the longitudinal direction, the sheath unit (3) having at least three telescopic elements (31, 32, 33, 34, 35) which are adjustable relative to one another in the longitudinal direction and are guided telescopically
wherein a positioning device (7) for synchronizing the relative movement has a synchronous rotor (71) which is mounted rotatably about a rotor axis (S) lying transversely to the longitudinal axis and can be rolled with its outer circumference on at least one telescopic element (31, 32, 33, 34, 35) in the longitudinal direction,
**characterized in**
**in that** the synchronous rotor (71) has at least one first synchronizing wheel (72) and one second synchronizing wheel (73), which are connected to one another in a rotationally fixed manner, the first synchronizing wheel (72) having a first pitch circle diameter (d1) and being able to be rolled on a first telescopic element (33), and the second synchronizing wheel (73) has a second pitch circle diameter (d2) and can be rolled on a second telescopic element (35), wherein the first pitch circle diameter (d1) is different from the second pitch circle diameter (d2).

2. Steering column (1) according to claim 1, **characterized in that** at least one synchronizing wheel (72, 73, 74, 75) is designed as a toothed wheel.

3. Steering column (1) according to one of the preceding claims, **characterized in that** at least one synchronizing wheel (72, 73, 74, 75) is designed as a friction wheel.

4. Steering column (1) according to one of the preceding claims, **characterized in that** the synchronous rotor (71) is rotatably mounted on a synchronous carrier which is formed by a telescopic element (31, 32, 33, 34, 35).

5. Steering column (1) according to one of the preceding claims, **characterized in that** the synchronous rotor (71) is rotatably mounted on a synchronous carrier (76), which is arranged movably relative to the telescopic elements (31, 32, 33, 34, 35).

6. Steering column (1) according to one of the preceding claims, **characterized in that** none of the synchronous wheels (72, 73, 74, 75) is rotatably mounted on a telescopic element (31, 32, 33, 34, 35).

7. Steering column (1) according to one of the preceding claims, **characterized in that** the synchronous axle (S) is arranged tangentially between two telescopic elements (31, 32, 33, 34, 35).

8. Steering column (1) according to one of the preceding claims 1 to 6, **characterized in that** the synchronous axle (S) passes radially through at least three telescopic elements (31, 32, 33, 34, 35).

9. Steering column (1) according to one of the preceding claims, **characterized in that** the synchronous rotor (71) extends radially through at least one telescopic element (31, 32, 33, 34, 35).

10. Steering column (1) according to one of the preceding claims, **characterized in that** a telescopic element (31, 32, 33, 34, 35) comprises a casing tube (31, 32, 33).

11. Steering column (1) according to one of the preceding claims, **characterized in that** a telescopic element (31, 32, 33, 34, 35) comprises a rolling bearing unit (34, 35) or sliding unit arranged between two casing tubes (31, 32, 33).

12. Steering column (1) according to one of the preceding claims, **characterized in that** the casing unit (3) has a steering spindle bearing unit (42).

13. Steering column (1) according to one of the preceding claims, **characterized in that** at least one synchronous wheel (72, 73, 74, 75) can be rolled on two telescopic elements (31, 32, 33, 34, 35).

## Revendications

1. Colonne de direction (1) pour un véhicule automobile, comprenant une unité d'enveloppe (3) dans laquelle un arbre de direction (4) est monté à rotation autour d'un axe longitudinal (L) s'étendant dans la direction longitudinale, l'unité d'enveloppe (3) présentant au moins trois éléments télescopiques (31, 32, 33, 34, 35) guidés de manière télescopique et réglables les uns par rapport aux autres dans la direction longitudinale
un dispositif de positionnement (7) présentant, pour la synchronisation du mouvement relatif, un rotor synchrone (71) qui est logé de manière à pouvoir tourner autour d'un axe de rotor (S) situé transversalement à l'axe longitudinal et qui peut être déroulé avec sa périphérie extérieure sur au moins un élément télescopique (31, 32, 33, 34, 35) dans le sens longitudinal,
**caractérisé en ce que**
**en ce que** le rotor synchrone (71) présente au moins une première roue synchrone (72) et une deuxième roue synchrone (73) qui sont reliées entre elles de manière solidaire en rotation, la première roue synchrone (72) ayant un premier diamètre de cercle primitif (d1) et pouvant être déroulée sur un premier élément télescopique (33), et la deuxième roue synchrone (73) a un deuxième diamètre de cercle primitif (d2) et peut être déroulée sur un deuxième élément télescopique (35), le premier diamètre de cercle primitif (d1) étant différent du deuxième diamètre de cercle primitif (d2).

2. Colonne de direction (1) selon la revendication 1, **caractérisée en ce qu'**au moins une roue de synchronisation (72, 73, 74, 75) est réalisée sous forme de roue dentée.

3. Colonne de direction (1) selon l'une des revendications précédentes, **caractérisée en ce qu'**au moins une roue de synchronisation (72, 73, 74, 75) est conçue comme une roue de friction.

4. Colonne de direction (1) selon l'une des revendications précédentes, **caractérisée en ce que** le rotor de synchronisation (71) est monté à rotation sur un support de synchronisation qui est formé par un élément télescopique (31, 32, 33, 34, 35).

5. Colonne de direction (1) selon l'une des revendications précédentes, **caractérisée en ce que** le rotor de synchronisation (71) est monté à rotation sur un support de synchronisation (76) qui est disposé de manière mobile par rapport aux éléments télescopiques (31, 32, 33, 34, 35).

6. Colonne de direction (1) selon l'une des revendications précédentes, **caractérisée en ce qu'**aucune des roues de synchronisation (72, 73, 74, 75) n'est montée à rotation sur un élément télescopique (31, 32, 33, 34, 35).

7. Colonne de direction (1) selon l'une des revendications précédentes, **caractérisée en ce que** l'axe de synchronisation (S) est disposé tangentiellement entre deux éléments télescopiques (31, 32, 33, 34, 35).

8. Colonne de direction (1) selon l'une des revendications précédentes 1 à 6, **caractérisée en ce que** l'axe de synchronisation (S) traverse radialement au moins trois éléments télescopiques (31, 32, 33, 34, 35).

9. Colonne de direction (1) selon l'une des revendications précédentes, **caractérisée en ce que** le rotor de synchronisation (71) s'étend radialement à travers au moins un élément télescopique (31, 32, 33, 34, 35).

10. Colonne de direction (1) selon l'une des revendications précédentes, **caractérisée en ce qu'**un élément télescopique (31, 32, 33, 34, 35) comprend un tube enveloppe (31, 32, 33).

11. Colonne de direction (1) selon l'une des revendications précédentes, **caractérisée en ce qu'**un élément télescopique (31, 32, 33, 34, 35) comprend une unité de palier à roulement (34, 35) ou une unité de coulissement disposée entre deux tubes d'enveloppe (31, 32, 33).

12. Colonne de direction (1) selon l'une des revendications précédentes, **caractérisée en ce que** l'unité d'enveloppe (3) comprend une unité de palier d'arbre de direction (42).

13. Colonne de direction (1) selon l'une des revendications précédentes, **caractérisée en ce qu'**au moins une roue de synchronisation (72, 73, 74, 75) peut être déroulée sur deux éléments télescopiques (31, 32, 33, 34, 35).
